# EUROPEAN PATENT SPECIFICATION

(11) **EP 4 368 485 B1**
(45) Date of publication and mention of the grant of the patent: **03.06.2026**
(21) Application number: 23175016.7
(22) Date of filing: 24.05.2023
(51) Int. Cl.: B62J 41/00, B60K 11/04, B60K 11/08, B60K 11/00

(54) **STRADDLED VEHICLE**
GRÄTSCHSITZFAHRZEUG
VÉHICULE À SELLE

(30) Priority: 14.11.2022 JP 2022181748
(43) Date of publication of application: 15.05.2024
(73) Proprietor: Yamaha Hatsudoki Kabushiki Kaisha, Iwata-shi, Shizuoka 438-8501 (JP)
(72) Inventor: Okada, Yoshitaka, Iwata-shi, Shizuoka (JP)
(74) Representative: Grünecker Patent- und Rechtsanwälte PartG mbB

(56) References cited:
- JP-U- S53 149 349
- US-A1- 2022 205 454
- US-B2- 10 247 083

## Description

The present invention relates to a straddled vehicle according to the preamble of independent claim 1. Such a straddled vehicle can be taken from the prior art document JP S53 149 349 U, which shows all the features of the preamble of independent claim 1.

Some straddled vehicles include a radiator, a radiator fan, and a fan cover. The radiator fan generates a flow of air through the radiator. The fan cover is disposed to cover the radiator fan, and guides the air that has passed through the radiator (hereinafter referred to as "exhaust air"). For example, the vehicle disclosed in JP 2008-013149 A includes an air guide plate that covers the radiator fan. The air guide plate includes a lower opening and guides the exhaust air so that the exhaust air is discharged from the lower opening.

In order to improve the cooling effect of the radiator by the radiator fan, it is desirable that the opening area of the air outlet provided in the fan cover is large. However, it is difficult to increase the opening area of the air outlet while suppressing an increase in the size of the fan cover. It is an object of the present invention to provide straddled vehicle that can improve a cooling effect of a radiator by a radiator fan in a straddled vehicle, and to suppress an increase in a size of a fan cover. According to the present invention said object is solved by a straddled vehicle having the features of independent claim 1. Preferred embodiments are laid down in the dependent claims.

A straddled vehicle according to one aspect of the present disclosure includes a radiator, a radiator fan, and a fan cover. The radiator fan is disposed behind the radiator. The fan cover covers the radiator fan from behind. The fan cover includes a cover body, a bulging portion, and an air outlet. The bulging portion bulges rearward from the cover body. The air outlet is provided across the cover body and the bulging portion.

In the straddled vehicle according to the present aspect, the fan cover is provided with the air outlet extending over the cover body and the bulging portion. As a result, the opening area of the air outlet is increased compared to the case where the air outlet is provided only in the cover body. In addition, the bulging portion increases the volume of the space inside the fan cover. This increases the cooling effect of the radiator by the radiator fan. Furthermore, the bulging portion has a shape that bulges from the cover body. That is, the bulging portion is formed by swelling the fan cover partially. Therefore, compared with the case of enlarging the entire fan cover in order to increase the opening area of the air outlet, the increase in size of the fan cover is suppressed.

The cover body may include an **upper** rear surface located behind the radiator fan. The bulging portion may be disposed below the upper rear surface and bulge rearward from the upper rear surface. In this case, the size of the radiator cover is reduced compared to the case where the entire rear surface of the radiator cover is bulging.

The air outlet includes a first lateral outlet that opens toward a first lateral side of the fan cover. The first lateral outlet may be provided across the cover body and the bulging portion. In this case, the increased opening area improves the cooling effect of the radiator fan. In addition, since the exhaust air is blown out from the first lateral outlet toward the first lateral side, the thermal influence on a component disposed behind the radiator fan is suppressed.

The bulging portion may include a first rear surface extending toward the first lateral outlet. The first rear surface may be inclined rearward toward the first lateral side. In this case, the opening area of the first lateral outlet increases. This increases the cooling effect of the radiator by the radiator fan.

The fan cover includes a lateral guide rib disposed in the fan cover and extending toward the first lateral outlet. In this case, the exhaust air inside the fan cover can be rectified so that the exhaust air can be efficiently blown out from the first lateral outlet.

The straddled vehicle may further include a side cowl. The side cowl may laterally cover the radiator. The side cowl may include an opening at least partially located above the fan cover. The lateral guide rib may be disposed so as to blow the exhaust air from the radiator fan obliquely upward from the first lateral outlet toward the opening of the side cowl. In this case, the exhaust air blown out from the first lateral outlet is efficiently guided toward the opening of the side cowl.

The air outlet further includes a second lateral outlet. The second lateral outlet may open toward a second lateral side opposite to the first lateral side of the fan cover. The second lateral outlet may be provided across the cover body and the bulging portion. In this case, the increased opening area improves the cooling effect of the radiator fan. In addition, since the exhaust air is blown out from the second lateral outlet toward the second lateral side, the thermal influence on a component disposed behind the radiator fan is suppressed.

The bulging portion may include a second rear surface extending toward the second lateral outlet. The second rear surface may be inclined rearward toward the second lateral side. In this case, the opening area of the second lateral outlet increases. This increases the cooling effect of the radiator by the radiator fan.

The second lateral outlet may be open so that the exhaust air generated by the radiator fan is blown obliquely upward from the second lateral outlet in accordance with a rotation direction of the radiator fan. In this case, the exhaust air is efficiently blown out from the second lateral outlet in accordance with the rotation direction of the radiator fan.

The straddled vehicle may further include a side cowl. The side cowl may laterally cover the radiator. The side cowl may include an opening at least partially located above the fan cover. The second lateral outlet may be open so that the exhaust air by the radiator fan is blown out from the second lateral outlet toward the opening in accordance with the rotation direction of the radiator fan. In this case, the exhaust air is blown out from the second lateral outlet in accordance with the rotation direction of the radiator fan, and is efficiently discharged from the opening of the side cowl.

The air outlet may further include a lower outlet that opens downward of the fan cover. In this case, the increased opening area improves the cooling effect of the radiator fan. In addition, since the exhaust air is blown out from the lower outlet disposed below the radiator fan, the thermal influence on a component disposed behind the radiator fan is suppressed.

The radiator fan may rotate counterclockwise as seen from the rear view. The first lateral outlet may be disposed to the left of the radiator fan. The second lateral outlet may be disposed to the right of the radiator fan. The fan cover may include a lateral guide rib. The lateral guide rib may be disposed to blow out the exhaust air by the radiator fan obliquely upward and leftward from the first lateral outlet. The second lateral outlet may be open so that the exhaust air by the radiator fan is blown obliquely upward and rightward from the second lateral outlet. In this case, the exhaust air blown out from the first lateral outlet is guided by the lateral guide rib and is guided obliquely upward and leftward from the first lateral outlet. In addition, the exhaust air from the second lateral outlet is blown obliquely upward and rightward by the flow generated by the counterclockwise rotation of the radiator fan

An upper end of the first lateral outlet may be located below an upper end of the second lateral outlet. In this case, the flow generated by the counterclockwise rotation of the radiator fan tends to flow obliquely downward and leftward at the first lateral outlet. By disposing the upper end of the first lateral outlet at a low position, the exhaust air is prevented from flowing obliquely downward and leftward from the first lateral outlet. As a result, the volume of exhaust air blown obliquely upward and leftward from the first lateral outlet can be increased.

The straddled vehicle further includes an engine, an air guide plate, and a fin. The engine is disposed behind the radiator. The air guide plate is disposed below the radiator. The air guide plate guides running wind that flows downward along the radiator without passing through the radiator toward the engine through below the radiator. The fin extends in the front-rear direction on the air guide plate. In this case, the running wind flowing downward along the radiator without passing through the radiator can be used to cool the engine. In addition, by rectifying the running wind with the fin, the flow speed of the running wind can be increased and sent to the engine. This improves the cooling efficiency of the engine.

### BRIEF DESCRIPTION OF THE DRAWINGS

FIG. 1 is a side view of a straddled vehicle according to an embodiment.
FIG. 2 is a front view of the straddled vehicle.
FIG. 3 is an enlarged left side view of the straddled vehicle.
FIG. 4 is a perspective view of a first lateral side cowl.
FIG. 5 is an enlarged right side view of the straddled vehicle.
FIG. 6 is a perspective view of a fan cover.
FIG. 7 is a top view of the fan cover.
FIG. 8 is a bottom view of the fan cover.
FIG. 9 is a front view of the fan cover.
FIG. 10 is a left side view of the fan cover.
FIG. 11 is a right side view of the fan cover.
FIG. 12 is a side view showing a radiator unit according to the present invention.
FIG. 13 is a perspective view of an air guide plate according to the present invention.

### DETAILED DESCRIPTION

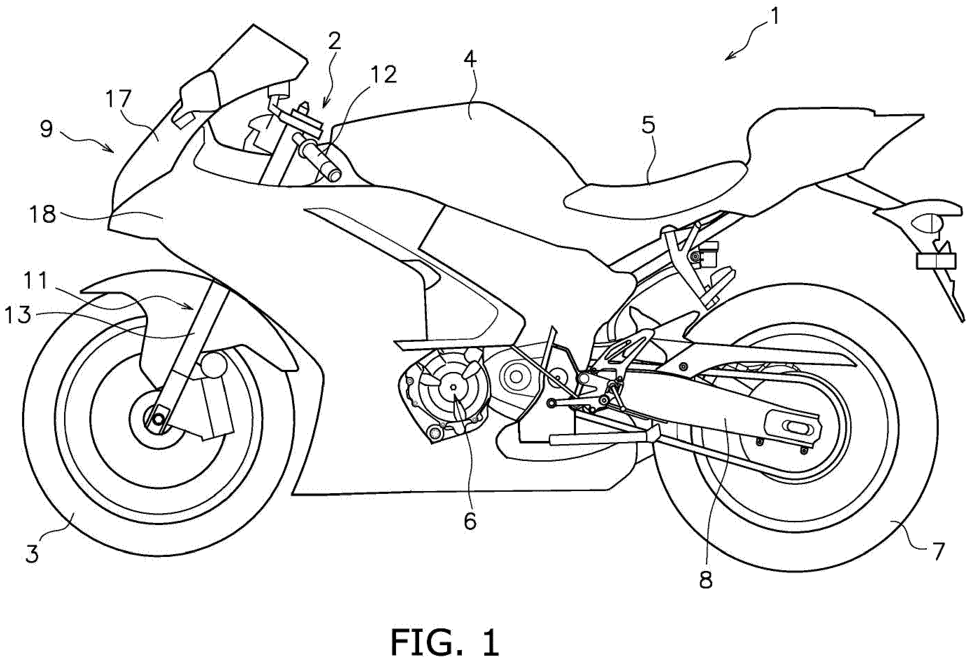

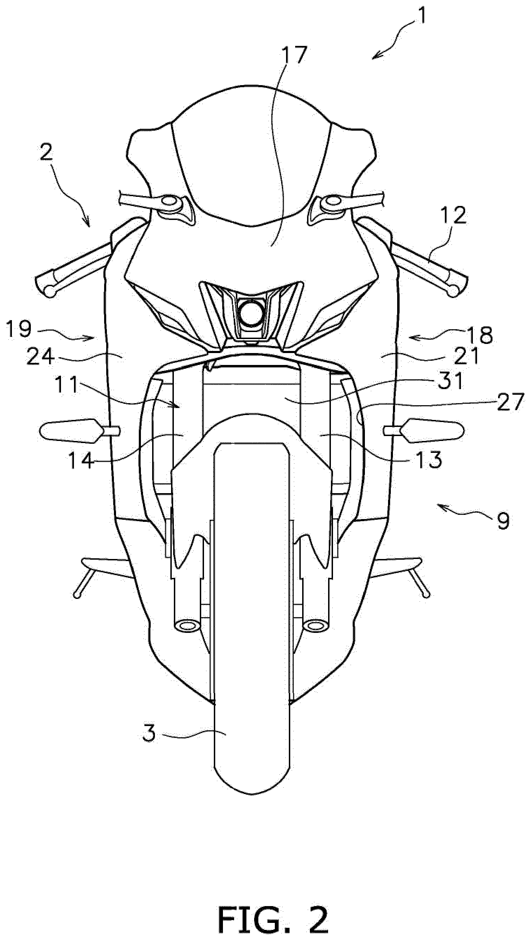

A straddled vehicle according to an embodiment will be described below with reference to the drawings. FIG. 1 is a side view of a straddled vehicle 1 according to an embodiment. FIG. 2 is a front view of the straddled vehicle 1. As shown in FIG. 1, the straddled vehicle 1 includes a steering device 2, a front wheel 3, a fuel tank 4, a seat 5, an engine 6, a rear wheel 7, a rear arm 8, and a vehicle body cover 9. In the present embodiment, the front, rear, left, and right directions refer to the front, rear, left, and right directions as seen from a rider on the seat 5.

The steering device 2 is steered by a rider. The steering device 2 includes a front fork 11 and a handle member 12. The front fork 11 rotatably supports the front wheel 3. The handle member 12 is connected to the front fork 11. As shown in FIG. 2, the front fork 11 includes a first suspension 13 and a second suspension 14.

The fuel tank 4 is disposed behind the handle member 12. The seat 5 is disposed behind the fuel tank 4. The engine 6 is disposed between the front wheel 3 and the rear wheel 7. The engine 6 is disposed below the fuel tank 4. The engine 6 generates driving force for rotating the rear wheel 7. The rear wheel 7 is disposed behind the engine 6. The rear wheel 7 is rotatably supported by the rear arm 8.

The vehicle body cover 9 includes a front cover 17, a first lateral side cowl 18, and a second lateral side cowl 19. The front cover 17 is disposed in front of the steering device 2. The first lateral side cowl 18 and the second lateral side cowl 19 extend rearward from the front cover 17. The first lateral side cowl 18 and the second lateral side cowl 19 cover the steering device 2 and the engine 6 from the lateral sides.

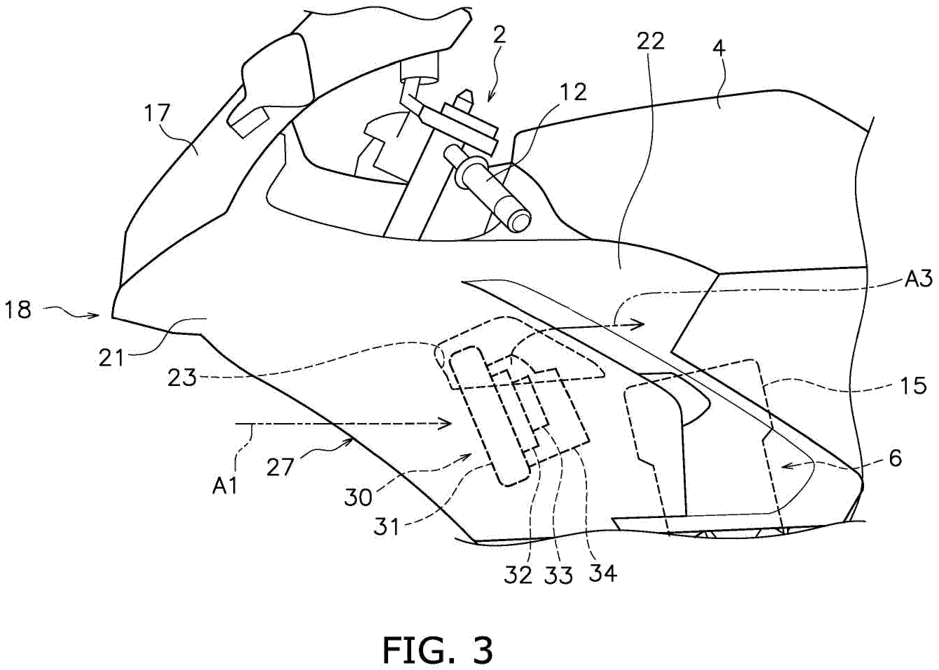

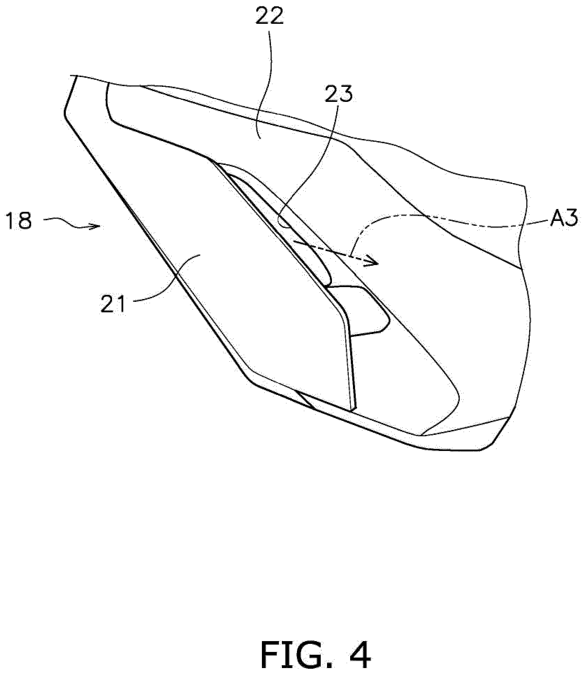

FIG. 3 is an enlarged left side view of the straddled vehicle 1. FIG. 4 is a perspective view of the first lateral side cowl 18. As shown in FIGS. 3 and 4, the first lateral side cowl 18 includes a first outer cowl 21 and a first inner cowl 22. The first outer cowl 21 is disposed laterally outside the first inner cowl 22. The first outer cowl 21 is disposed with a gap from the first inner cowl 22. The first inner cowl 22 includes a first opening 23. The first opening 23 communicates with the internal space of the vehicle body cover 9. The first outer cowl 21 covers the first opening 23 from the lateral side. The first outer cowl 21 overlaps the first opening 23 as seen from the vehicle side view.

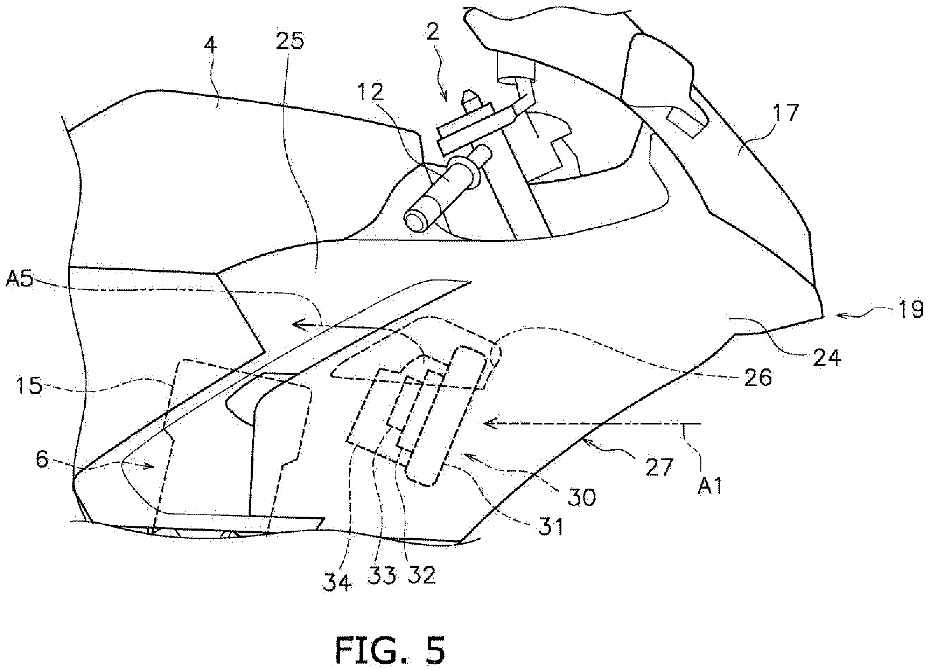

FIG. 5 is an enlarged right side view of the straddled vehicle 1. As shown in FIG. 5, the second lateral side cowl 19 includes a second outer cowl 24 and a second inner cowl 25. The second outer cowl 24 is disposed laterally outside the second inner cowl 25. The second outer cowl 24 and the second inner cowl 25 have the same structures as the first outer cowl 21 and the first inner cowl 22, respectively. The second inner cowl 25 includes a second opening 26. The second opening 26 communicates with the internal space of the vehicle body cover 9.

As shown in FIG. 3, the straddled vehicle 1 includes a radiator unit 30. The radiator unit 30 is disposed behind the front fork 11. The radiator unit 30 is disposed in front of the engine 6. The radiator unit 30 is laterally covered with the first lateral side cowl 18 and the second lateral side cowl 19. The radiator unit 30 includes a radiator 31, a radiator fan 32, a fan motor 33, and a fan cover 34.

The radiator 31 cools the coolant of the engine 6. The first lateral side cowl 18 and the second lateral side cowl 19 described above cover the radiator 31 from the lateral sides. As shown in FIG. 2, the vehicle body cover 9 includes a front opening 27. The front opening 27 opens forward of the straddled vehicle 1. The front opening 27 is disposed below the front cover 17 as seen from the vehicle front view. The front opening 27 is disposed between the first lateral side cowl 18 and the second lateral side cowl 19. The radiator 31 is disposed facing the front opening 27 between the first lateral side cowl 18 and the second lateral side cowl 19.

The radiator fan 32 is disposed behind the radiator 31. The radiator fan 32 rotates to generate an air flow passing through the radiator 31 from front to rear.

The fan motor 33 is disposed behind the radiator fan 32. The fan motor 33 supports the radiator fan 32. The fan motor 33 rotates the radiator fan 32. The fan motor 33 is attached to the fan cover 34. The fan motor 33 rotates the radiator fan 32 counterclockwise as seen from the vehicle rear view.

The fan cover 34 is disposed behind the radiator fan 32. The fan cover 34 covers the radiator fan 32 from behind. As shown in FIGS. 3 and 5, the first lateral side cowl 18 and the second lateral side cowl 19 described above cover the fan cover 34 from the lateral sides. The engine 6 is disposed behind the fan cover 34. Specifically, the engine 6 includes a cylinder head 15. The cylinder head 15 is disposed behind the fan cover 34. At least a part of the first opening 23 and the second opening 26 described above is located above the fan cover 34.

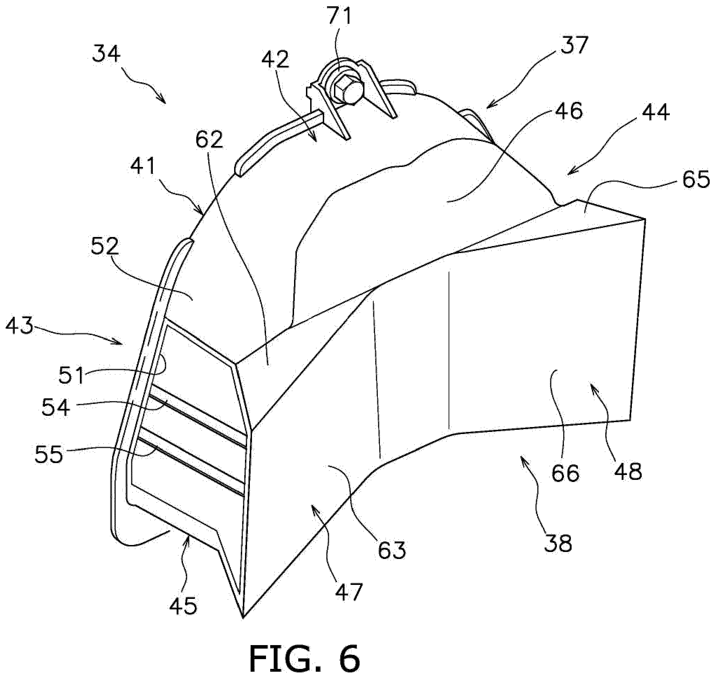

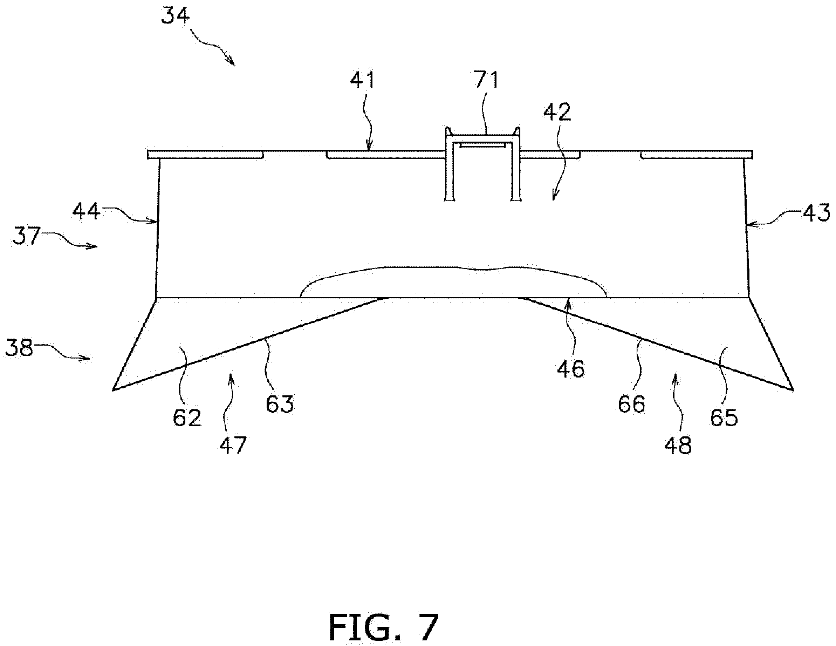

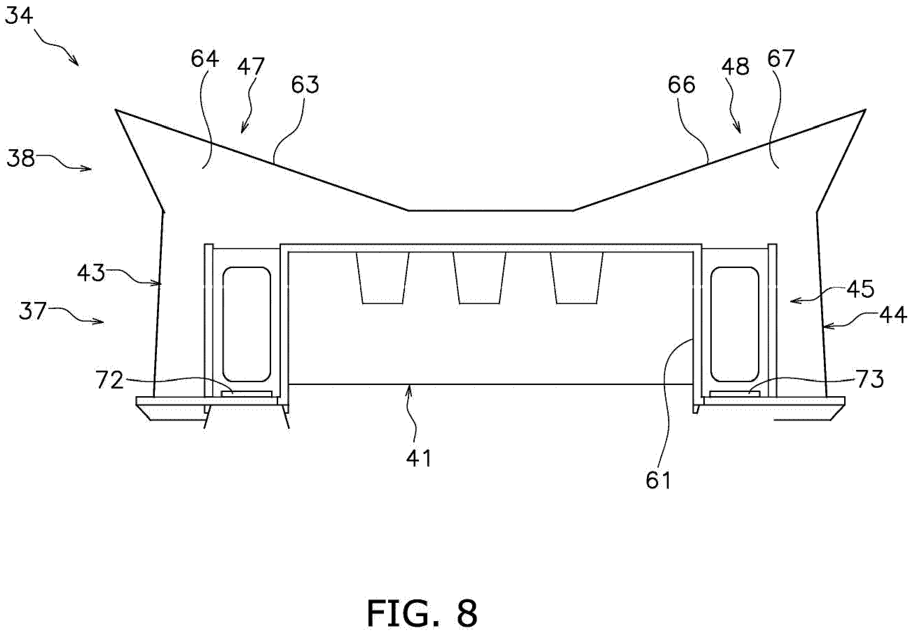

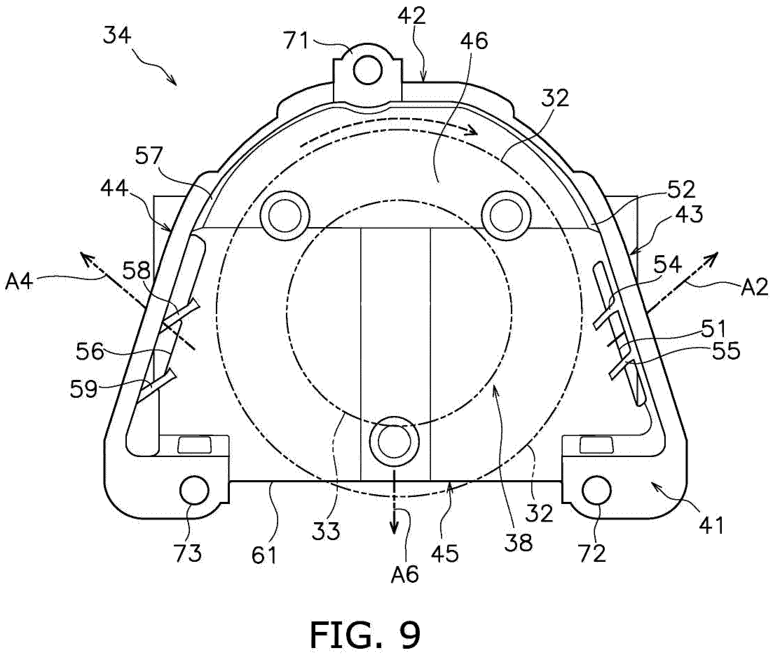

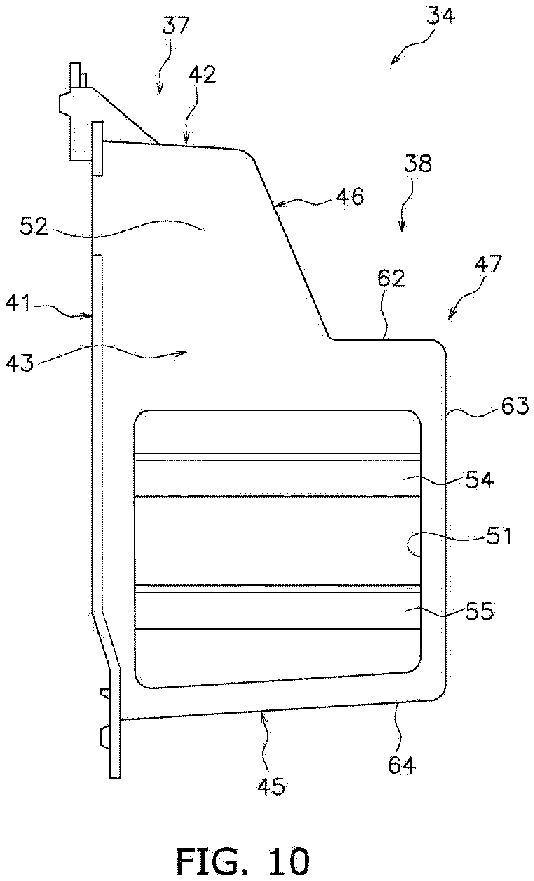

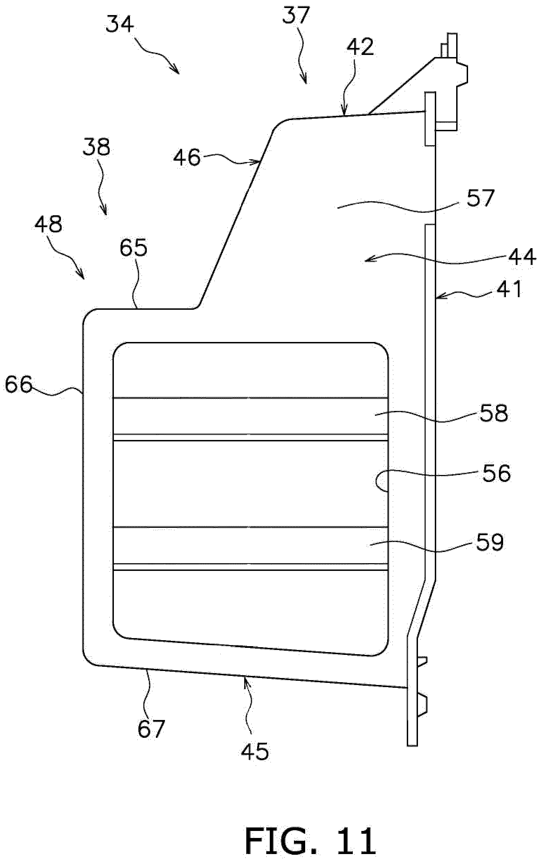

FIG. 6 is a perspective view of the fan cover 34. FIG. 7 is a top view of the fan cover 34. FIG. 8 is a bottom view of the fan cover 34. FIG. 9 is a front view of the fan cover 34. FIG. 10 is a left side view of the fan cover 34. FIG. 11 is a right side view of the fan cover 34. As shown in FIGS. 6 to 11, the fan cover 34 includes a cover body 37 and a bulging portion 38. The cover body 37 includes a front surface 41, an upper surface 42, a first lateral side surface 43, a second lateral side surface 44, a bottom surface 45, and an upper rear surface 46.

The front surface 41 is open. The front surface 41 is disposed facing the radiator 31 and is closed by the radiator 31. The upper surface 42 is disposed above the radiator fan 32. The upper surface 42 covers the radiator fan 32 from above. The upper surface 42 has an upwardly curved shape. The upper surface 42 has a curved shape that follows the contour of the radiator fan 32. The upper surface 42 is closed.

The first lateral side surface 43 is disposed to the left of the radiator fan 32. The first lateral side surface 43 covers the radiator fan 32 from the left side. The first lateral side surface 43 is inclined rearward and leftward. The first lateral side surface 43 includes a first lateral outlet 51, a first lateral side wall 52, and a plurality of lateral guide ribs 54 and 55. The first lateral outlet 51 is disposed to the left of the radiator fan 32. The first lateral outlet 51 opens leftward. The first lateral side wall 52 closes the upper side of the first lateral outlet 51.

The lateral guide ribs 54 and 55 are disposed across the first lateral outlet 51 in the front-rear direction. As shown in FIG. 9, portions of the lateral guide ribs 54 and 55 are disposed inside the fan cover 34. The lateral guide ribs 54 and 55 extend toward the first lateral outlet 51. The lateral guide ribs 54 and 55 extend upward and leftward. When the radiator fan 32 rotates counterclockwise as seen in the vehicle rear view, the exhaust air from the radiator fan 32 flows diagonally downward and leftward inside the first lateral side surface 43. The lateral guide ribs 54 and 55 are disposed to blow out the exhaust air from the radiator fan 32 obliquely upward and leftward from the first lateral outlet 51.

The second lateral side surface 44 is disposed to the right of the radiator fan 32. The second lateral side surface 44 covers the radiator fan 32 from the right side. The second lateral side surface 44 is inclined downward and rightward. The second lateral side surface 44 includes a second lateral outlet 56, a second lateral side wall 57, and a plurality of reinforcing ribs 58 and 59. The second lateral outlet 56 is disposed to the right of the radiator fan 32. The second lateral outlet 56 opens rightward. When the radiator fan 32 rotates counterclockwise as seen in the vehicle rear view, the exhaust air from the radiator fan 32 flows diagonally upward and rightward inside the second lateral side surface 44. The second lateral outlet 56 is open so that the exhaust air from the radiator fan 32 is blown out obliquely upward and rightward from the second lateral outlet 56 in accordance with the rotation direction of the radiator fan 32. The second lateral side wall 57 closes the upper side of the second lateral outlet 56 on the second lateral side surface 44.

The second lateral outlet 56 is longer than the first lateral outlet 51 in the vertical direction. An upper end of the second lateral outlet 56 is located above an upper end of the first lateral outlet 51. In other words, the upper end of the first lateral outlet 51 is located below the upper end of the second lateral outlet 56. The opening area of the second lateral outlet 56 is larger than the opening area of the first lateral outlet 51. Note that the second lateral outlet 56 may have the same size as the first lateral outlet 51. The reinforcing ribs 58 and 59 are disposed across the second lateral outlet 56 in the front-rear direction. The reinforcing ribs 58 and 59 extend downward and rightward.

The bottom surface 45 is disposed below the radiator fan 32. The bottom surface 45 covers the radiator fan 32 from below. The bottom surface 45 includes a lower outlet 61. The lower outlet 61 is disposed below the radiator fan 32. As shown in FIG. 9, the lower outlet 61 is larger than the fan motor 33 in the left-right direction.

The upper rear surface 46 faces the radiator fan 32 behind the radiator fan 32. The upper rear surface 46 is disposed behind the radiator fan 32. The upper rear surface 46 covers the radiator fan 32 from behind.

The bulging portion 38 bulges rearward from the cover body 37. The bulging portion 38 is disposed below the upper rear surface 46 and bulges rearward from the upper rear surface 46. The bulging portion 38 includes a first bulging portion 47 and a second bulging portion 48. The first bulging portion 47 and the second bulging portion 48 are disposed side by side in the left-right direction. The first bulging portion 47 is disposed on the left side, and the second bulging portion 48 is disposed on the right side.

The first bulging portion 47 includes a first upper surface 62, a first rear surface 63, and a first bottom surface 64. The first upper surface 62 is connected to the upper rear surface 46 of the cover body 37. The first upper surface 62 extends rearward from the upper rear surface 46. The first rear surface 63 is inclined rearward toward the left side. The first bottom surface 64 is connected to the bottom surface 45 of the cover body 37. The first bottom surface 64 extends rearward from the bottom surface 45. The first upper surface 62, the first rear surface 63, and the first bottom surface 64 extend toward the first lateral outlet 51. The left side surface of the first bulging portion 47 is open and forms part of the first lateral outlet 51 described above. That is, the first lateral outlet 51 is provided across the cover body 37 and the first bulging portion 47.

The second bulging portion 48 includes a second upper surface 65, a second rear surface 66, and a second bottom surface 67. The second upper surface 65 is connected to the upper rear surface 46 of the cover body 37. The second upper surface 65 extends rearward from the upper rear surface 46. The second rear surface 66 is inclined rearward toward the right side. The second bottom surface 67 is connected to the bottom surface 45 of the cover body 37. The second bottom surface 67 extends rearward from the bottom surface 45. The second upper surface 65, the second rear surface 66, and the second bottom surface 67 extend toward the second lateral outlet 56. The right side surface of the second bulging portion 48 is open and forms part of the above-described second lateral outlet 56. That is, the second lateral outlet 56 is provided across the cover body 37 and the second bulging portion 48.

As shown in FIG. 9, the fan cover 34 includes a plurality of radiator fixing portions 71-73. The fan cover 34 is fixed to the radiator 31 at the plurality of radiator fixing portions 71-73. The plurality of radiator fixing portions 71-73 includes a first radiator fixing portion 71, a second radiator fixing portion 72, and a third radiator fixing portion 73. The first radiator fixing portion 71 is connected to the upper surface 42. The second radiator fixing portion 72 and the third radiator fixing portion 73 are connected to the bottom surface 45.

In the straddled vehicle 1 according to the present embodiment, as indicated by an arrow A1 in FIG. 3, running wind passes through the radiator 31 as the radiator fan 32 rotates. The coolant of the engine 6 is thereby cooled in the radiator 31.

The running wind that has passed through the radiator 31 is taken into the fan cover 34 as exhaust air. As indicated by an arrow A2 in FIG. 9, part of the exhaust air is guided by the lateral guide ribs 54 and 55 and blown obliquely upward from the first lateral outlet 51. The exhaust air from the first lateral outlet 51 is blown out toward the first opening 23 of the first lateral side cowl 18, flows through between the first outer cowl 21 and the first inner cowl 22, and is discharged toward the rear of the vehicle as indicated by an arrow A3 in FIG. 3.

As shown in FIG. 9, part of the exhaust air is blown obliquely upward from the second lateral outlet 56 in accordance with the rotation direction of the radiator fan 32. The exhaust air from the second lateral outlet 56 is blown out toward the second opening 26 of the second lateral side cowl 19, flows through between the second outer cowl 24 and the second inner cowl 25, and is discharged toward the rear of the vehicle as shown by an arrow A5 in FIG. 5.

Part of the exhaust air is blown downward from the lower outlet 61, as indicated by an arrow A6 in FIG. 9. The exhaust air from the lower outlet 61 flows downward from the fan cover 34, passes through the inside of the vehicle body cover 9, and is discharged to the rear of the vehicle.

In the straddled vehicle 1 according to the present embodiment, the fan cover 34 includes the first lateral outlet 51 extending over the cover body 37 and the bulging portion 38. As a result, the opening area of the first lateral outlet 51 is increased compared to the case where the first lateral outlet 51 is provided only in the cover body 37. Moreover, the volume of the space inside the fan cover 34 is increased by the bulging portion 38. Thereby, the cooling effect of the radiator 31 by the radiator fan 32 is increased. Furthermore, the bulging portion 38 has a shape that bulges from the cover body 37. That is, the bulging portion 38 is formed by partially bulging the fan cover 34. Therefore, compared with the case where the entire fan cover 34 is enlarged in order to increase the opening area of the first lateral outlet 51, the increase in size of the fan cover 34 is suppressed. In addition, the inclination of the first rear surface 63 allows the exhaust air to flow smoothly, thereby increasing the cooling effect of the radiator 31 by the radiator fan 32. The effect similar to that of the first lateral outlet 51 can be obtained for the second lateral outlet 56 as well.

The straddled vehicle 1 according to the embodiment described above is a so-called full cowl type motorcycle. However, the saddle type vehicle is not limited to a full cowl type motorcycle, and may be a half cowl or naked type motorcycle. Alternatively, the straddled vehicle may be a vehicle such as a scooter or moped.

The structure of the fan cover 34 is not limited to that of the above embodiment, and may be modified. For example, the shape of the first lateral outlet 51 may be changed. The first lateral outlet 51 may be omitted. The shape of the second lateral outlet 56 may be changed. The second lateral outlet 56 may be omitted. The shape of the lower outlet 61 may be changed. The lower outlet 61 may be omitted.

The first bulging portion 47 and the second bulging portion 48 may be disposed to be left-right reversed from the above embodiment. Only one of the first bulging portion 47 and the second bulging portion 48 may be provided in the fan cover 34. The lower outlet 61 may be provided across the bottom surface 45 of the cover body 37 and the bulging portion 38.

In the above embodiment, the radiator fan 32 is a counterclockwise radiator fan, but may be a clockwise radiator fan. In that case, the fan motor 33 may rotate the radiator fan 32 clockwise as seen in the vehicle rear view. In addition, in the fan cover 34, the first lateral side surface 43 and the second lateral side surface 44 may be disposed in the left-right reversed manner from the above-described embodiment. That is, when the radiator fan 32 rotates clockwise in the rear view, the first lateral outlet 51 and the second lateral outlet 56 in the fan cover 34 may be disposed in the opposite direction from the above embodiment. That is, in the above embodiment the first lateral side is the left side and the second lateral side is the right side. However, the first lateral side may be the right side and the second lateral side may be the left side.

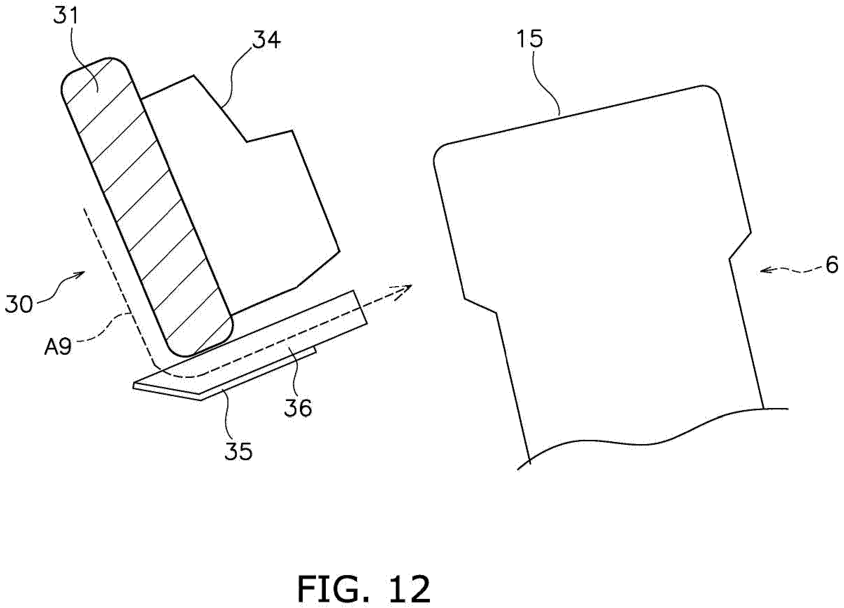

FIG. 12 is a side view showing a radiator unit 30 according to the present invention. As shown in FIG. 12, the radiator unit 30 includes an air guide plate 35.

The air guide plate 35 is disposed below the radiator 31. A front end of the air guide plate 35 is bent upward. The air guide plate 35 guides the running wind that flows downward along the radiator 31 without passing through the radiator 31 toward the cylinder head 15 of the engine 6 through below the radiator 31 as indicated by an arrow A9. As a result, running wind that has not passed through the radiator 31 is used to cool the engine 6.

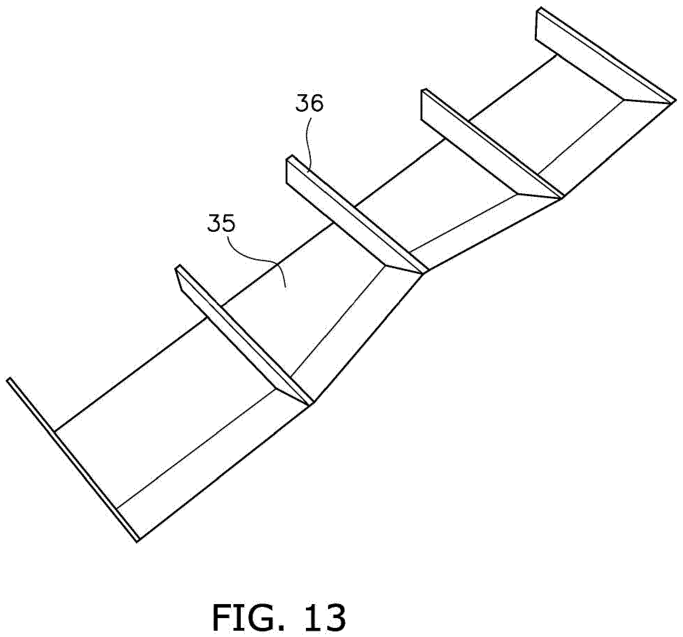

FIG. 13 is a perspective view of the air guide plate 35. As shown in FIG. 13, the air guide plate 35 includes a plurality of fins 36. In the drawing, only one of the plurality of fins 36 is denoted by reference numeral 36, and the reference numerals of the other fins 36 are omitted. The fins 36 extend in the front-rear direction on the air guide plate 35. The cooling efficiency of the engine 6 is improved by rectifying the running wind passing through the air guide plate 35 with the fins 36.

### REFERENCE SIGNS LIST

6: Engine
18: First lateral side cowl
19: Second lateral side cowl
23: First opening
26: Second opening
31: Radiator
32: Radiator fan
34: Fan cover
35: Air guide plate
36: Fin
37: Cover body
38: Bulging portion
46: Upper rear surface
51: First lateral outlet
54: Lateral guide rib
56: Second lateral outlet
61: Lower outlet
63: First rear surface
66: Second rear surface

## Claims

1. A straddled vehicle (1) comprising:
a radiator (31);
an engine (6) disposed behind the radiator (31) with regard to a vehicle front-rear direction;
a radiator fan (32) disposed behind the radiator (31) with regard to the vehicle front-rear direction; and
a fan cover (34) that covers the radiator fan (32) from behind with regard to the vehicle front-rear direction, wherein
the fan cover (34) includes
a cover body (37),
a bulging portion (38) that bulges rearward from the cover body (37) with regard to the vehicle front-rear direction, and
at least one air outlet (51, 56, 61) that includes a first lateral outlet (51) that opens toward a first lateral side of the fan cover (34) and a second lateral outlet (56) that opens toward a second lateral side opposite to the first lateral side of the fan cover (34), wherein
the first lateral outlet (51) is provided across the cover body (37) and the bulging portion (38) with regard to the vehicle left-right direction,
the second lateral outlet (56) is provided across the cover body (37) and the bulging portion (38) with regard to the vehicle left-right direction, and the straddled vehicle is further **characterized in that** it comprises:
an air guide plate (35) disposed below the radiator (31) with regard to the vehicle up-down direction and configured to guide running wind flowing downward along the radiator (31) with regard to the vehicle up-down direction without passing through the radiator (31) toward the engine (6) through below the radiator (31) with regard to the vehicle up-down direction; and
at lest one fin (36) extending in the vehicle front-rear direction on the air guide plate (35).

2. The straddled vehicle (1) according to claim 1, **characterized in that** the cover body (37) includes an upper rear surface (46) disposed behind the radiator fan (32) with regard to the vehicle front-rear direction,
the bulging portion (38) is disposed below the upper rear surface (46) with regard to a vehicle up-down direction, and
the bulging portion (38) bulges rearward from the upper rear surface (46) with regard to the vehicle front-rear direction.

3. The straddled vehicle (1) according to claim 1 or 2, **characterized in that** the bulging portion (38) includes a first rear surface (63) extending toward the first lateral outlet (51), and
the first rear surface (63) is inclined rearward with regard to the vehicle front-rear direction toward the first lateral side with regard to the vehicle front-rear direction.

4. The straddled vehicle (1) according to any one of claims 1 to 3, **characterized in that** the fan cover (34) includes at least one lateral guide rib (54, 55) disposed in the fan cover (34) and extending toward the first lateral outlet (51).

5. The straddled vehicle (1) according to claim 4, **characterized by**:
a first side cowl (18) that laterally covers the radiator (31) with regard to the vehicle left-right direction, wherein
the first side cowl (18) includes a first opening (23) at least partially located above the fan cover (34) with regard to the vehicle up-down direction, and
the lateral guide rib (54, 55) is disposed so as to blow an exhaust air by the radiator fan (32) obliquely upward with regard to the vehicle up-down direction from the first lateral outlet (51) toward the first opening (23) of the first side cowl (18).

6. The straddled vehicle (1) according to any one of claims 1 to 5, **characterized in that**
the bulging portion (38) includes a second rear surface (66) extending toward the second lateral outlet (56), and
the second rear surface (66) is inclined rearward with regard to the vehicle front-rear direction toward the second lateral side.

7. The straddled vehicle (1) according to any one of claims 1 to 6, **characterized in that** the second lateral outlet (56) is open so that the exhaust air by the radiator fan (32) is blown obliquely upward with regard to the vehicle up-down direction from the second lateral outlet (56) in accordance with a rotation direction of the radiator fan (32).

8. The straddled vehicle (1) according to any one of claims 1 to 7, **characterized by**:
a second side cowl (19) that laterally covers the radiator (31), wherein
the second side cowl (19) includes a second opening (26) at least partially located above the fan cover (34) with regard to the vehicle up-down direction, and
the second lateral outlet (56) is open so that the exhaust air by the radiator fan (32) is blown out from the second lateral outlet (56) toward the second opening (26) in accordance with the rotation direction of the radiator fan (32).

9. The straddled vehicle (1) according to any one of claims 1 to 8, **characterized in that** the air outlet includes a lower outlet (61) that opens downward of the fan cover (34) with regard to the vehicle up-down direction.

10. The straddled vehicle (1) according to any one of claims 1 to 9, **characterized in that** the radiator fan (32) is configured to rotate counterclockwise as seen in a vehicle rear view,
the first lateral outlet (51) is disposed to a left side of the radiator fan (32) with regard to the vehicle left-right direction,
the second lateral outlet (56) is disposed to a right side of the radiator fan (32) with regard to the vehicle left-right direction,
the fan cover (34) includes a lateral guide rib (54) disposed to blow out the exhaust air by the radiator fan (32) obliquely upward with regard to the vehicle up-down direction and leftward from the first lateral outlet (51) with regard to the vehicle left-right direction, and
the second lateral outlet (56) is open so that the exhaust air by the radiator fan (32) is blown out obliquely upward with regard to the vehicle up-down direction and rightward from the second lateral outlet (56) with regard to the vehicle left-right direction.

11. The straddled vehicle (1) according to claim 10, **characterized in that** an upper end of the first lateral outlet (51) is located below an upper end of the second lateral outlet (56) with regard to the vehicle up-down direction.

## Patentansprüche

1. Ein Spreizsitzfahrzeug (1), das umfasst:
einen Kühler (31);
einen Motor (6), der in Fahrzeug-Vorder-Rück-Richtung hinter dem Kühler (31) angeordnet ist;
einen Kühlerlüfter (32), der in Fahrzeug-Vorder-Rück-Richtung hinter dem Kühler (31) angeordnet ist; und
eine Lüfterabdeckung (34), die den Kühlerlüfter (32) in Fahrzeug-Vorder-Rück-Richtung von hinten abdeckt, wobei
die Lüfterabdeckung (34) enthält
einen Abdeckungskörper (37),
einen Ausbuchtungsabschnitt (38), der in Fahrzeug-Vorder-Rück-Richtung vom Abdeckungskörper (37) nach hinten ausbuchtet, und
zumindest einen Luftauslass (51, 56, 61), der einen ersten seitlichen Auslass (51), der sich zu einer ersten Seite der Lüfterabdeckung (34) hin öffnet, und einen zweiten seitlichen Auslass (56) , der sich zu einer zweiten Seite der Lüfterabdeckung (34) hin öffnet, die der ersten Seite der Lüfterabdeckung (34) gegenüberliegt, enthält, wobei der erste seitliche Auslass (51) in Bezug auf die Fahrzeug-Links-Rechts-Richtung quer über den Abdeckungskörper (37) und den vorstehenden Abschnitt (38) angeordnet ist,
der zweite seitliche Auslass (56) in Bezug auf die Fahrzeug-Links-Rechts-Richtung quer über den Abdeckungskörper (37) und den vorstehenden Abschnitt (38) angeordnet ist, und das Spreizsitzfahrzeug ferner **dadurch gekennzeichnet ist, dass** es umfasst:
eine Luftleitplatte (35), die in Fahrzeug-Auf-Ab-Richtung unterhalb des Kühlers (31) angeordnet und so ausgebildet ist, dass sie den in Fahrzeug-Auf-Ab-Richtung entlang des Kühlers (31) nach unten strömenden Fahrtwind, ohne dass dieser den Kühler (31) durchströmt, in Fahrzeug-Auf-Ab-Richtung unterhalb des Kühlers (31) hindurch zum Motor (6) leitet; und
zumindest eine Rippe (36), die sich in der Fahrzeug-Vorder-Rück-Richtung auf der Luftleitplatte (35) erstreckt.

2. Das Spreizsitzfahrzeug (1) gemäß Anspruch 1, **dadurch gekennzeichnet, dass** der Abdeckungskörper (37) eine obere Rückseite (46) enthält, die in Fahrzeug-Vorder-Rück-Richtung hinter dem Kühlerlüfter (32) angeordnet ist,
der Ausbuchtungsabschnitt (38) in Fahrzeug-Auf-Ab-Richtung unterhalb der oberen Rückseite (46) angeordnet ist, und
der Ausbuchtungsabschnitt (38) in der Fahrzeug-Vorder-Rück-Richtung von der oberen Rückseite (46) nach hinten ausbuchtet.

3. Das Spreizsitzfahrzeug (1) gemäß Anspruch 1 oder 2, **dadurch gekennzeichnet, dass** der Ausbuchtungsabschnitt (38) eine erste Rückseite (63) enthält, die sich in Richtung des ersten seitlichen Auslasses (51) erstreckt, und
die erste Rückseite (63) in Bezug auf die Fahrzeug-Vorder-Rück-Richtung nach hinten in Richtung der ersten seitlichen Seite geneigt ist.

4. Das Spreizsitzfahrzeug (1) gemäß irgendeinem der Ansprüche 1 bis 4, **dadurch gekennzeichnet, dass** die Lüfterabdeckung (34) zumindest eine seitliche Führungsrippe (54, 55) enthält, die in der Lüfterabdeckung (34) angeordnet ist und sich in Richtung des ersten seitlichen Auslasses (51) erstreckt.

5. Das Spreizsitzfahrzeug (1) gemäß Anspruch 4, **gekennzeichnet durch**:
eine erste Seitenverkleidung (18), die den Kühler (31) in der Links-Rechts-Richtung seitlich abdeckt, wobei
die erste Seitenverkleidung (18) eine erste Öffnung (23) enthält, die in der Fahrzeug-Auf-Ab-Richtung zumindest teilweise über der Lüfterabdeckung (34) angeordnet ist, und
die seitliche Führungsrippe (54, 55) so angeordnet ist, dass sie die vom Kühlerlüfter (32) erzeugte Abluft in Bezug auf die Fahrzeug-Auf-Ab-Richtung schräg nach oben vom ersten seitlichen Auslass (51) in Richtung der ersten Öffnung (23) der ersten Seitenverkleidung (18) bläst.

6. Das Spreizsitzfahrzeug (1) gemäß irgendeinem der Ansprüche 1 bis **5, dadurch gekennzeichnet, dass** der Ausbuchtungsabschnitt (38) eine zweite Rückseite (66) enthält, die sich in Richtung des zweiten seitlichen Auslasses (56) erstreckt, und
die zweite Rückseite (66) in Bezug auf die Fahrzeug-Vorder-Rück-Richtung nach hinten in Richtung der zweiten seitlichen Seite geneigt ist.

7. Das Spreizsitzfahrzeug (1) gemäß irgendeinem der Ansprüche 1 bis 6, **dadurch gekennzeichnet, dass** der zweite seitliche Auslass (56) so offen ist, dass die vom Kühlerlüfter (32) erzeugte Abluft entsprechend der Drehrichtung des Kühlerlüfters (32) in Bezug auf die Fahrzeug-Auf-Ab-Richtung schräg nach oben aus dem zweiten seitlichen Auslass (56) geblasen wird.

8. Das spreizsitzfahrzeug (1) gemäß irgendeinem der Ansprüche 1 bis 7, **gekennzeichnet durch**:
eine zweite Seitenverkleidung (19), die den Kühler (31) seitlich abdeckt, wobei die zweite Seitenverkleidung (19) eine zweite Öffnung (26) enthält, die in Bezug auf die Fahrzeug-Auf-Ab-Richtung zumindest teilweise über der Lüfterabdeckung (34) angeordnet ist, und
der zweite seitliche Auslass (56) so offen ist, dass die vom Kühlerlüfter (32) erzeugte Abluft entsprechend der Drehrichtung des Kühlerlüfters (32) aus dem zweiten seitlichen Auslass (56) in Richtung der zweiten Öffnung (26) geblasen wird.

9. Das Spreizsitzfahrzeug (1) gemäß irgendeinem der Ansprüche 1 bis 8, **dadurch gekennzeichnet, dass** der Luftauslass einen unteren Auslass (61) enthält, der in Bezug auf die Fahrzeug-Auf-Ab-Richtung nach unten von der Lüfterabdeckung (34) öffnet.

10. Das Spreizsitzfahrzeug (1) gemäß irgendeinem der Ansprüche 1 bis 9, **dadurch gekennzeichnet, dass** der Kühlerlüfter (32) so ausgebildet ist, dass er sich aus der Fahrzeugrückansicht gesehen gegen den Uhrzeigersinn dreht,
der erste seitliche Auslass (51) in Bezug auf die Fahrzeug-Links-Rechts-Richtung auf der linken Seite des Kühlerlüfters (32) angeordnet ist,
der zweite seitliche Auslass (56) in Bezug auf die Fahrzeug-Links-Rechts-Richtung auf der rechten Seite des Kühlerlüfters (32) angeordnet ist,
die Lüfterabdeckung (34) eine seitliche Führungsrippe (54) enthält, die so angeordnet ist, dass die vom Kühlerlüfter (32) erzeugte Abluft schräg nach oben in Bezug auf die Fahrzeug-Auf-Ab-Richtung und nach links vom ersten seitlichen Auslass (51) in Bezug auf die Fahrzeug-Links-Rechts-Richtung geblasen wird, und
der zweite seitliche Auslass (56) so offen ist, dass die vom Kühlerlüfter (32) erzeugte Abluft schräg nach oben in Bezug auf die Fahrzeug-Auf-Ab-Richtung und nach rechts vom zweiten seitlichen Auslass (56) in Bezug auf die Fahrzeug-Links-Rechts-Richtung geblasen wird.

11. Das Spreizsitzfahrzeug (1) gemäß Anspruch 10, **dadurch gekennzeichnet, dass** sich ein oberes Ende des ersten seitlichen Auslasses (51) in Bezug auf die Fahrzeug-Auf-Ab-Richtung unterhalb eines oberen Endes des zweiten seitlichen Auslasses (56) befindet.

## Revendications

1. Véhicule à enfourcher (1) comprenant :
un radiateur (31) ;
un moteur (6) disposé derrière le radiateur (31) par rapport à une direction avant-arrière du véhicule ;
un ventilateur de radiateur (32) disposé derrière le radiateur (31) par rapport à la direction avant-arrière du véhicule ; et
un carénage de ventilateur (34) qui recouvre le ventilateur de radiateur (32) par l'arrière par rapport à la direction avant-arrière du véhicule,
dans lequel le carénage de ventilateur (34) inclut un corps de carénage (37),
une portion bombée (38) qui est bombée vers l'arrière du corps de carénage (37) par rapport à la direction avant-arrière du véhicule, et
au moins une sortie d'air (51, 56, 61) qui inclut une première sortie latérale (51) s'ouvrant vers un premier côté latéral du carénage de ventilateur (34) et une deuxième sortie latérale (56) s'ouvrant vers un deuxième côté latéral opposé au premier côté latéral du carénage de ventilateur (34), dans lequel
la première sortie latérale (51) est pourvue à travers le corps de carénage (37) et la portion bombée (38) par rapport à la direction gauche-droite du véhicule,
la deuxième sortie latérale (56) est pourvue à travers le corps de carénage (37) et la portion bombée (38) par rapport à la direction gauche-droite du véhicule, et
le véhicule à enfourcher est en outre **caractérisé en ce qu'**il comprend :
une plaque de guidage d'air (35) disposée sous le radiateur (31) par rapport à la direction haut-bas du véhicule et configurée pour guider le flux d'air descendant le long du radiateur (31) par rapport à la direction haut-bas du véhicule sans traverser le radiateur (31) vers le moteur (6) par-dessous le radiateur (31) par rapport à la direction haut-bas du véhicule ; et
au moins une ailette (36) s'étendant dans la direction avant-arrière du véhicule sur la plaque de guidage d'air (35).

2. Véhicule à enfourcher (1) selon la revendication 1, **caractérisé en ce que**
le corps de carénage (37) inclut une surface arrière supérieure (46) disposée derrière le ventilateur de radiateur (32) par rapport à la direction avant-arrière du véhicule,
la portion bombée (38) est disposée sous la surface arrière supérieure (46) par rapport à une direction haut-bas du véhicule, et
la portion bombée (38) est bombée vers l'arrière de la surface arrière supérieure (46) par rapport à la direction avant-arrière du véhicule.

3. Véhicule à enfourcher (1) selon la revendication 1 ou 2, **caractérisé en ce que**
la portion bombée (38) inclut une première surface arrière (63) s'étendant vers la première sortie latérale (51), et
la première surface arrière (63) est inclinée vers l'arrière par rapport à la direction avant-arrière du véhicule vers le premier côté latéral par rapport à la direction avant-arrière du véhicule.

4. Véhicule à enfourcher (1) selon l'une quelconque des revendications 1 à 3, **caractérisé en ce que** le carénage de ventilateur (34) inclut au moins une nervure de guidage latérale (54, 55) disposée dans le carénage de ventilateur (34) et s'étendant vers la première sortie latérale (51).

5. Véhicule à enfourcher (1) selon la revendication 4, **caractérisé par** :
un premier capot latéral (18) qui recouvre latéralement le radiateur (31) par rapport à la direction gauche-droite du véhicule, dans lequel
le premier capot latéral (18) inclut une première ouverture (23) située au moins partiellement au-dessus du carénage de ventilateur (34) par rapport à la direction haut-bas du véhicule, et
la nervure de guidage latérale (54, 55) est disposée de manière à souffler un air d'échappement du ventilateur de radiateur (32) en oblique vers le haut par rapport à la direction haut-bas du véhicule depuis la première sortie latérale (51) vers la première ouverture (23) du premier capot latéral (18).

6. Véhicule à enfourcher (1) selon l'une quelconque des revendications 1 à 5, **caractérisé en ce que**
la portion bombée (38) inclut une deuxième surface arrière (66) s'étendant vers la deuxième sortie latérale (56), et
la deuxième surface arrière (66) est inclinée vers l'arrière par rapport à la direction avant-arrière du véhicule vers le deuxième côté latéral.

7. Véhicule à enfourcher (1) selon l'une quelconque des revendications 1 à 6, **caractérisé en ce que** la deuxième sortie latérale (56) est ouverte de sorte que l'air d'échappement du ventilateur de radiateur (32) est soufflé en oblique vers le haut par rapport à la direction haut-bas du véhicule depuis la deuxième sortie latérale (56) conformément à une direction de rotation du ventilateur de radiateur (32).

8. Véhicule à enfourcher (1) selon l'une quelconque des revendications 1 à 7, **caractérisé par** :
un deuxième capot latéral (19) qui recouvre latéralement le radiateur (31), dans lequel
le deuxième capot latéral (19) inclut une deuxième ouverture (26) située au moins partiellement au-dessus du carénage de ventilateur (34) par rapport à la direction haut-bas du véhicule, et
la deuxième sortie latérale (56) est ouverte de sorte que l'air d'échappement du ventilateur de radiateur (32) est expulsé de la deuxième sortie latérale (56) vers la deuxième ouverture (26) conformément à la direction de rotation du ventilateur de radiateur (32).

9. Véhicule à enfourcher (1) selon l'une quelconque des revendications 1 à 8, **caractérisé en ce que** la sortie d'air inclut une sortie inférieure (61) qui s'ouvre vers le bas du carénage de ventilateur (34) par rapport à la direction haut-bas du véhicule.

10. Véhicule à enfourcher (1) selon l'une quelconque des revendications 1 à 9, **caractérisé en ce que**
le ventilateur de radiateur (32) est configuré pour tourner en sens antihoraire en vue arrière du véhicule,
la première sortie latérale (51) est disposée sur un côté gauche du ventilateur de radiateur (32) par rapport à la direction gauche-droite du véhicule,
la deuxième sortie latérale (56) est disposée sur un côté droit du ventilateur de radiateur (32) par rapport à la direction gauche-droite du véhicule,
le carénage de ventilateur (34) inclut une nervure de guidage latérale (54) disposée pour expulser l'air d'échappement du ventilateur de radiateur (32) en oblique vers le haut par rapport à la direction haut-bas du véhicule et vers la gauche de la première sortie latérale (51) par rapport à la direction gauche-droite du véhicule, et
la deuxième sortie latérale (56) est ouverte de sorte que l'air d'échappement du ventilateur de radiateur (32) est expulsé en oblique vers le haut par rapport à la direction haut-bas du véhicule et vers la droite depuis la deuxième sortie latérale (56) par rapport à la direction gauche-droite du véhicule.

11. Véhicule à enfourcher (1) selon la revendication 10, **caractérisé en ce que** l'extrémité supérieure de la première sortie latérale (51) est située en dessous d'une extrémité supérieure de la deuxième sortie latérale (56) par rapport à la direction haut-bas du véhicule.
